# EUROPEAN PATENT SPECIFICATION

(11) **EP 1 197 403 B1**
(45) Date of publication and mention of the grant of the patent: **07.09.2005**
(21) Application number: 01850167.6
(22) Date of filing: 10.10.2001
(51) Int. Cl.: B60R 22/46

(54) **Safety belt pretensioner**
Gurtstraffer und Kraftbegrenzer
Prétensionneur de ceinture de sécurité

(30) Priority: 12.10.2000 SE 0003681
(43) Date of publication of application: 17.04.2002
(73) Proprietor: VOLVO CAR CORPORATION, 405 31 Göteborg (SE)
(72) Inventor: Jernström, Clas, 436 45 Askim (SE)
(74) Representative: Hellbom, Lars Olof

(56) References cited:
- US-A- 5 947 514
- US-A- 6 079 745
- PATENT ABSTRACTS OF JAPAN vol. 1999, no. 14, 22 December 1999 (1999-12-22) -& JP 11 247906 A (TOKAI RIKA CO LTD), 14 September 1999 (1999-09-14) -& US 6 244 531 B1 (HORI SEIJI ET AL) 12 June 2001 (2001-06-12)

## Description

The present invention relates to a device for pretensioning a safety belt web joined to a reel mechanism in a vehicle, comprising a cylinder, a piston which is displaceable in the cylinder and has a piston rod, which is joined to one side of the piston and extends through an opening in one end wall of the cylinder, a motion-transmitting element acting between the piston rod and the reel mechanism, said element upon displacement of the piston in one direction achieving rotation of the reel mechanism in the winding-up direction of the belt web, a pyrotechnic charge which, when detonated, causes a pressure increase in a cylinder chamber between the piston and a cylinder end wall for displacement of the piston in said one direction, and means for controlling the pressure in said cylinder chamber depending on the weight of a person held in by the belt.

Belt pretensioners are at present generally used for safety belts in motor vehicles to take up the slack, in a collision, between the web windings on the spool of the reel mechanism and, at the same time, tension up the web against the passenger's body, in order to prevent, as much as possible, sliding under or jerking, resulting in whip-lash. It is a known fact that a higher pretensioning force is required to eliminate slack and retain a heavy person against the seat than for a light person and that pretensioning which is too forceful can damage a small, light person.

Various devices and methods for adapting the pretensioning force to the weight of the passenger are known. For example, DE-OS 38 17 942 shows two different solutions based on controlling the pressure in the cylinder chamber at expansion by the drive gas formed at detonation, so that the pressure will be lower for a lighter person than for a heavier person. In both cases, a mechanical device is utilized in the seat, which reacts to pressing down the seat cushion. In one case, the volume of the cylinder chamber is controlled by the mechanical device displacing a movable wall in the chamber. If the person is heavy, the wall is set so that the volume will be small. If the person is light, the volume is increased so that the force on the person will be less. In the latter case, a valve slide is controlled relative to a number of evacuation openings from the cylinder chamber in such a manner that the gas in the chamber is evacuated earlier the lighter the person is. In the first case, the weight adaption of the pretensioning is infinitely variable, while in the second case it is effected in six steps. A device for weight adaption of the belt pretensioning in only two steps is known by DE 296 12 781 U1. Here, a piston-cylinder device is used with two propulsion charges, both of which are set off if the person on the seat is heavy. If the person is light, only one of the propulsion charges is set off.

Common to the described known solutions, is that the piston-cylinder devices are pulling, i.e. the starting position is with the piston rod out of the cylinder, and consequently the expansion volume for the propulsion charges will be situated on the piston rod side of the piston. During expansion, the piston rod is thus drawn into the cylinder. It is in this case difficult to achieve complete sealing between the piston rod and the opening in the cylinder wall, and therefore some leakage of propellant gas is difficult to avoid.

One purpose of the present invention is to achieve a device of the type described by way of introduction, which makes possible secure precision adaptation of the pretensioning to the weight of the passenger. An additional purpose of the invention is to achieve such a device which eliminates the risk of propellant gas leaking out between the piston rod and the cylinder opening, through which the piston rod extends.

This is achieved according to the invention by virtue of the fact that said cylinder chamber is delimited between the side of the piston opposite to the piston rod and the second end wall of the cylinder, that the motion-transmitting element is arranged to rotate the reel mechanism in the winding-up direction of the belt web, when the piston is displaced in the projection direction of the piston rod, and that said cylinder chamber has an outlet, which communicates with a spill valve, which can be set between various degrees of opening and a completely closed position.

By rotating the reel mechanism in the winding-up direction of the belt, using a pushing instead of a pulling movement of the piston rod, the expansion chamber will be on the side of the piston which does not have any through-hole for the piston rod, which eliminates one source of leakage for the propellant gas. This, in combination with a spill valve which can be set at a completely closed position, means that the piston-cylinder device can be blocked in the pretensioned position. In a preferred further development of the device according to the invention, this possibility is utilized, in combination with a positional sensor coupled to the control unit, a so-called "roll-over sensor", which senses if the vehicle is upside-down, providing a signal to the control unit to close the spill valve to thus block the device in the pretensioned position so that the passenger is held securely against the seat and will not risk hitting his head against the vehicle ceiling.

In a further development of the device according to the invention, the motion-transmitting element is joined to and is partially wound up on a drum, which is solidly joined to a ring gear of a planetary gear set, which is so disposed and coupled to the reel mechanism that the gear ratio between the ring gear and the reel mechanism is 1:1 when the ring gear rotates in the winding-up direction of the belt web and is geared up upon rotation in the opposite direction, so that winding up of a certain length of the motion-transmitting element on the drum of the ring gear corresponds to a several times longer feeding-out of the web from the reel mechanism.

In a previously known design, the force-limiting function subsequent to pretensioning upon reeling out of the belt due to the load caused by vehicle retardation from the passenger's body against the belt is achieved by plastic deformation of a torsion element in the reel mechanism. In practical embodiments, the feed-out length of the belt is, for design reasons, limited to circa 300 mm. By utilizing a planetary gear set between the motion-transmitting element and the reel mechanism, the feed-out length can be increased by at least 50% without any problem.

The invention will now be described in more detail with reference to examples shown in the accompanying drawings, where
Fig. 1a shows a schematic longitudinal section through one embodiment of a piston-cylinder device with a valve and a motion-transmitting element according to the invention, and Fig. 1b shows an enlargement of the valve in Fig. 1a with associated means for controlling the valve,
Fig. 2 shows a schematic longitudinal section through a reel mechanism with a first embodiment of a planetary gear set,
Fig. 3a shows a partial enlargement of the planetary gear set in Fig. 2 with associated blocking means in the pretensioning position, and Fig. 3b shows a schematic side view of the gear set in Fig. 3a,
Fig. 4a shows a partial enlargement of the planetary gear set in Fig. 2 with associated blocking means in the force-limiting position, and Fig. 4b shows a schematic side view of the gear set in Fig. 4a,
Fig. 5 shows a schematic longitudinal section through a second embodiment of a planetary gear set,
Fig. 6 shows a diagram of the belt displacement as a function of time during the pretensioning and force-limiting stages.

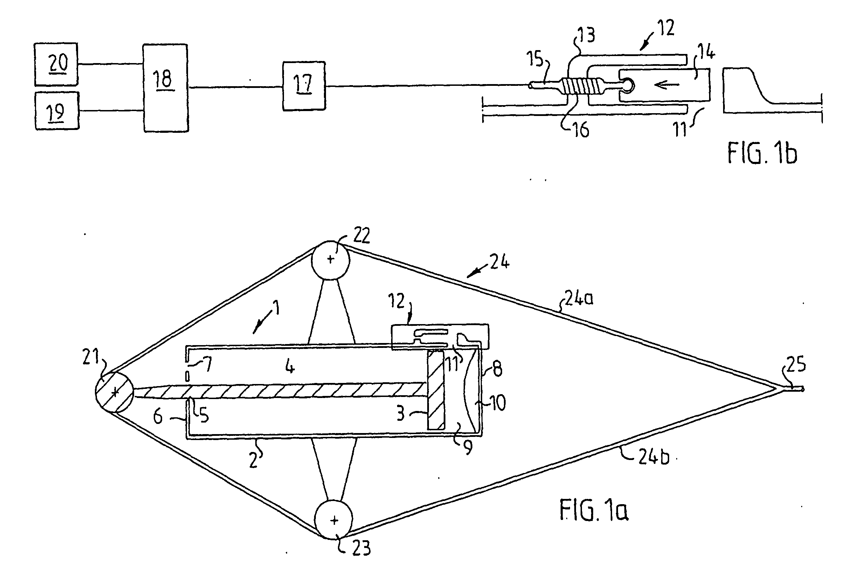

In Fig. 1a, 1 designates a piston-cylinder device with a cylinder 2 and a piston 3 displaceable in the cylinder. The piston 3 is joined to a piston rod 4, which extends through an opening 5 in one end wall 6 of the cylinder 2. The end wall also has a ventilation opening 7. The opposite end wall 8 of the cylinder 2 and the piston 3 delimit an expansion chamber 9, in which a pyrotechnic charge 10 with a detonator is placed. The charge 10 is designed to be exploded by retardation-sensitive means, which are known per se and not shown in more detail here. The cylinder wall in the area of the expansion chamber 9 is made with an opening 11 leading to a valve device 12, through which propellant gas in the expansion chamber can be led out to the environment.

The valve device 12 (Fig. 1b) has a valve slide 14 displaceable in a housing 13, joined to a rotatable set screw 15 in a threaded bore 16 in the housing. The set screw 15 is rotatable with the aid of a servomotor 17, which is controlled by an electronic control unit 18 as a function of signals, firstly, from a weight-sensitive sensor 19, which can be built in to the weight-bearing portion of the vehicle seat (not shown) to register the weight of the person sitting in the seat, and secondly, from a so-called roll-over sensor 20 which senses if the vehicle is about to end up upside-down.

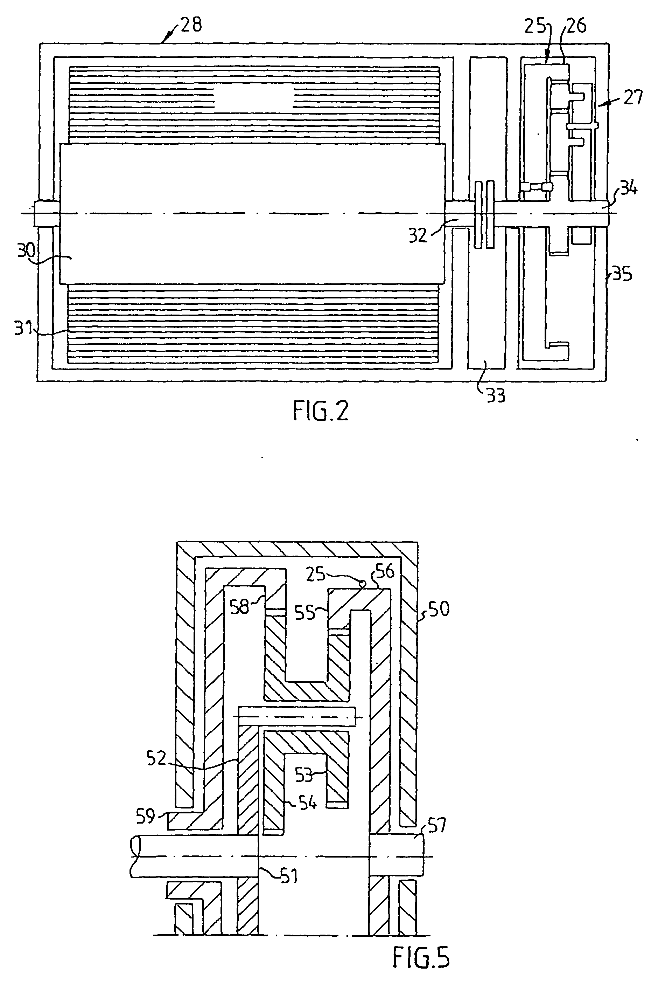

At the end of the piston rod 4, there is a roller 21, and on either side of the cylinder 2 there are two rollers 22 and 23, over which there runs a closed cable loop 24. The two parts 24a and 24b of the loop converge in a single cable 25 which is joined to a drum 26, which, via a planetary gear set 27, is arranged to drive a reel mechanism (Fig. 2) which is known per se and is generally designated 28, as will be described below. This arrangement with a pushing piston rod instead of a pulling piston rod eliminates one opening in the end wall 8 on the expansion chamber side of the piston 3. The arrangement with a cable loop 24 around the piston assures that there will be a symmetrical load on the piston rod 4.

When the passenger(s) is(are) seated and the driver turns the ignition key, the sensors 19 and 20 cooperating with the control unit 18 are activated, and the control unit 18, via the servomotor 17, sets the valve slide 14 to a position which is calculated to provide the optimal catch sequence for the occupant. The relationship between the occupant's weight and the size of the valve opening can be determined by tests and be stored in the control unit. In general, the valve opening is less the higher the weight. If the "roll-over sensor" indicates that the vehicle is about to end up upside-down, the control unit 18 closes the valve 12, so that the reel mechanism 28 will be fixed in its pretensioning position by blocking the piston 3. The lack of a piston rod opening in the expansion chamber 9 assures that gas cannot leak out and change the position of the piston.

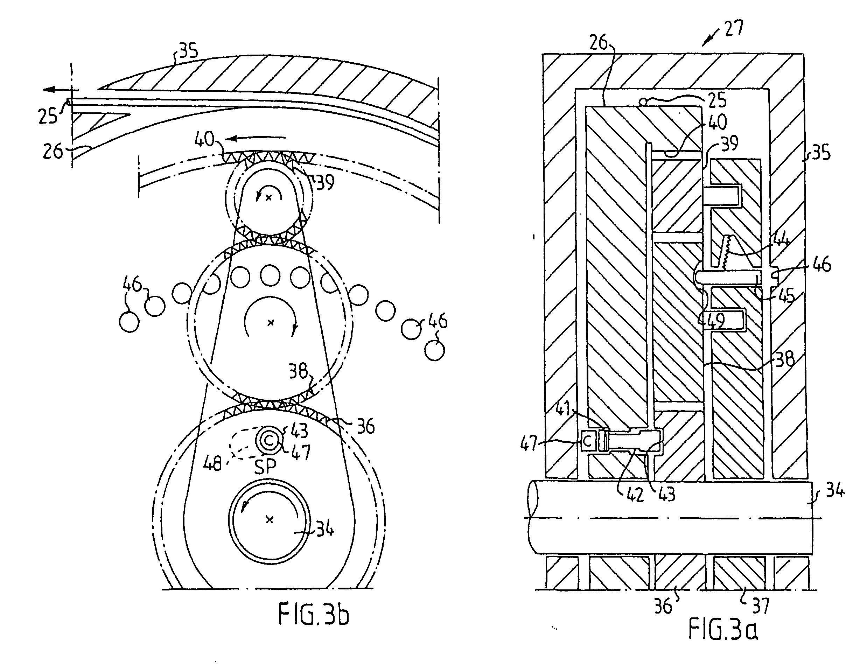

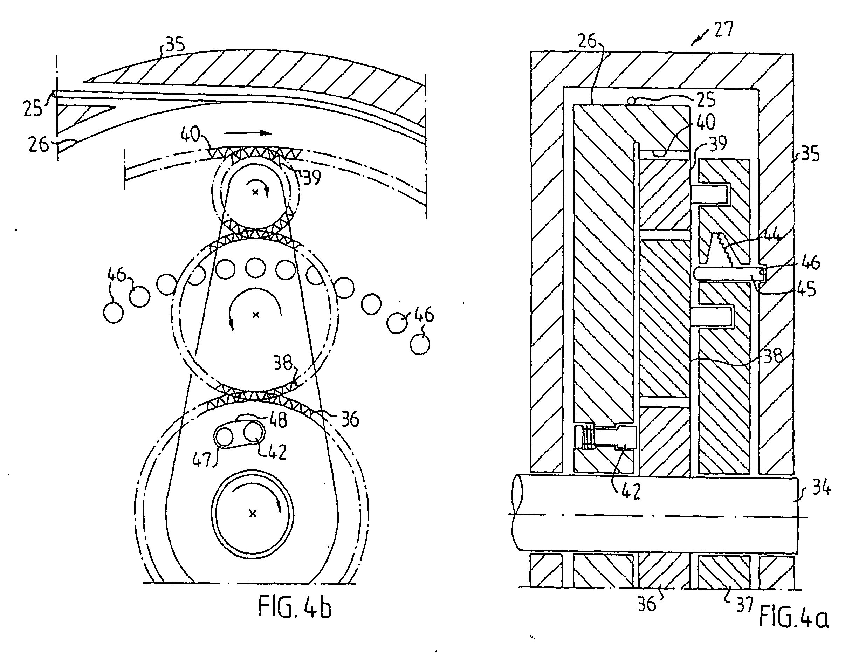

Fig. 2 shows the planetary gear set 27 and the reel mechanism 28. The latter is of a type known per se and has a belt bobbin 30 with a belt web 31 wound up on the bobbin. The bobbin has a shaft 32 which, via a web jerk and compartment retardation sensitive retractor mechanism 33 (indicated only schematically here), is joined to a shaft 34 of the planetary gear set 27, which is shown in more detail in Fig. 3a, 3b, 4a and 4b. The shaft 34 is rotatably mounted in a housing 35, which is solidly joined, or made in one piece with the housing in which the bobbin shaft 32 is mounted. The housing 35 is thus solidly mounted in the vehicle. The planetary gear set shaft 34 carries a sun gear 36, engaging first planet gears 38 carried by a planet carrier 27. The planet gears 38 engage second planet gears 39 carried by a second planet carrier. The second planet gears 39 engage in turn a toothed rim 40 on the interior of the drum 26, which thus forms the ring gear of the planetary gear set 27. With the aid of first blocking means in the form of a spring 41 loaded-pin 42 in the end wall of the drum. The pin 42 extends into a cavity 43 in the sun gear 36, and thus the ring gear 40 and consequently also the drum can be locked to the sun gear 36 (Figs. 3a and 3b). With the aid of other blocking means in the form of a second pin 45, loaded by a snap-spring 44 and disposed in a bore in the planet gear carrier 37, said pin projecting into a cavity 46 in the housing 35, the planet gear carrier 37 can be locked to the housing (Figs. 4a and 4b).

The starting position is the position shown in Figs. 3a and 3b, i.e. the pin 42 locks the sun gear 36 to the ring gear 40, which means a gear ratio of 1:1 between the shaft 34 and the drum 26. The pin 42 is kept in the position shown by a cylindrical body 47, which is held in an arcuate groove 48 in the end wall of the drum. In a collision, the retractor mechanism 33 will lock together the shaft 32 of the bobbin and the planetary gear set 34 at the same as the charge 10 in the cylinder expansion chamber 9 is detonated. The cable 25, which is joined to and is somewhat wound up on the drum, will now turn the drum an angle which is dependent on the length of stroke of the piston 3 and the diameter of the drum 26. The belt web 31 is now pretensioned so that the slack of the web windings on the bobbin 30 is taken up and the belt is tightened against the occupant, the tightening sequence being determined by the setting of the valve 12.

When the piston 3 has reached its end position in the cylinder 2, the pretensioning is completed and the forces on the belt web change directions as the occupant loads the belt during the retardation. This will also reverse the torque direction in the planetary gear set, thereby initiating the force-limiting stage, which is illustrated in Figs. 4a and 4b. Thus, the shaft 34 with the sun gear 36 begins to rotate in a direction opposite to the original pretensioning direction, and the cylindrical body 47, which is held by the friction against the housing 35 under the influence of the spring 41, is displaced in the groove 48 to the position shown in Fig. 4b, which means that the spring 41 can move the pin 42 out of the cavity 43, as is shown in Fig. 4a. The sun gear 36 can now rotate relative to the drum 26. The torque will be transmitted from the sun gear 36 to the planet gears 38 and 39 and to the planet gear carrier 37, prompting an initial relative movement between the first planet gear 38 and the planet gear carrier 37. The pin 45, which during the pretensioning stage was kept with its end inserted into a flanked depression 49 in the first planet gear 38 under the force of the snap-spring 44, will now be pressed towards the planet gear carrier 37, which is provided, along a circle directly opposite the pin, with a plurality of uniformly spaced depressions 46. The snap-spring 44 will snap the opposite end of the pin into one of these depressions 46 so that the planet gear carrier 37 will be locked to the housing 35. There will thereby be a gear ratio between the shaft 34 of the planetary gear set and its ring gear 40, corresponding to the relationship between the number of teeth on the sun gear 36 and the ring gear 40. A similar ratio is obtained between the return stroke of the piston and the feed-out length of the belt. The force under which this process occurs is determined by the setting of the valve 12 and is thus adapted to the occupant's weight.

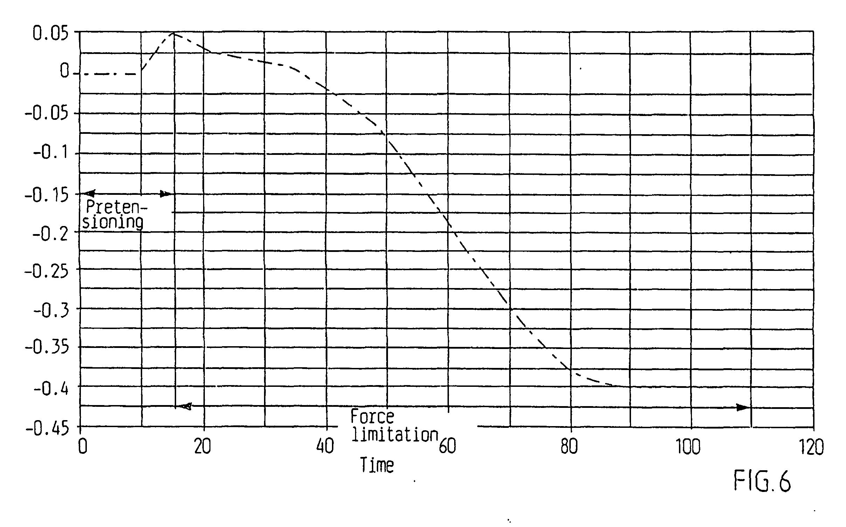

The belt displacement as a function of time for one embodiment of the device according to the invention is illustrated in the diagram in Fig. 6. As can be seen from the diagram, the belt, during the pretensioning phase, is pulled in up to 5 cm in circa 15 ms and that the belt is thereafter fed out, during the force-limiting phase, 45 cm in circa 75 ms, which means that the entire belt displacement process takes circa 90 ms and that the gear ratio in the planetary gear set is circa 9:1, if the diameter of the drum and the medium diameter of the fed out web windings from the bobbin are approximately equal.

In order to obtain a large gear ratio in the planetary gear set, without the diameter of the drum tending to be so large that space problems are created, it is most suitable to arrange the gearing in two steps. One example of such a planetary gear set is shown in Fig. 5. The gear set has a housing 50, in which a first shaft 51 is rotatably mounted. The shaft 51 carries a planet gear carrier 52, on which first and second planet gears 53 and 54, solidly joined to each other, are mounted. A first ring gear 55, disposed on the inside of a drum 56 joined to the cable 25, is joined to a second shaft 57 mounted in the housing. The first ring gear 55 engages the first planet gears 53. A second ring gear 58 engages the second planet gears 54 and is joined to a sleeve 59, which is mounted concentrically in the housing with the first shaft 51, which is connectable to the belt bobbin shaft with the aid of a belt jerk and passenger compartment retardation-sensitive retractor mechanism (not shown in more detail here). With the aid of blocking means (not shown in more detail here), which can be one-way clutches, sawtooth blocking mechanisms or snap-locks of a type known per se, during the pretensioning phase the first shaft 51 can be locked relative to the second shaft 57 to establish a gear ratio of 1:1, and, during the force-limiting phase, the second ring gear 58 can be locked to the housing 50, while the shafts 51 and 57 are released relative to each other, thus providing a high gear ratio between the shafts 51 and 57.

The invention makes possible precision adaption of the catching phase to the weight of the occupant, both during the pretensioning of the belt and force-limiting during the subsequent belt feed-out. The possibility of having a long belt feed-out makes it possible to optimize the force-limiting phase. Finally, the arrangement makes possible a roll-over function by virtue of the fact that the valve can be closed after the pretensioning phase so that the occupant is held securely in his seat.

## Claims

1. Device for pretensioning a safety belt web (31) joined to a reel mechanism (28) in a vehicle, comprising a cylinder (2), a piston (3) which is displaceable in the cylinder and has a piston rod (4), which is joined to one side of the piston and extends through an opening (5) in one end wall (6) of the cylinder, a motion-transmitting element (24, 25) acting between the piston rod and the reel mechanism, said element upon displacement of the piston in one direction achieving rotation of the reel mechanism in the winding-up direction of the belt web, a pyrotechnic charge (10) which, when detonated, causes a pressure increase in a cylinder chamber (9) between the piston and a cylinder end wall (8) for displacement of the piston in said one direction, and means (12) for controlling the pressure in said cylinder chamber depending on the weight of a person held in by the belt, **characterized in that** said cylinder chamber (9) is delimited between the side of the piston (3) opposite to the piston rod (4) and the second end wall (8) of the cylinder, that the motion-transmitting element (24, 25) is arranged to rotate the reel mechanism (28) in the winding-up direction of the belt web, when the piston is displaced in the projection direction of the piston rod, and that said cylinder chamber has an outlet (11), which communicates with a spill valve (12), which can be set between various degrees of opening and a completely closed position.

2. Device according to claim 1, **characterized in that** the spill valve (12) is continuously adjustable between various degrees of opening and a closed position.

3. Device according to claim 2, **characterized in that** the spill valve (12) has a valve element (14) which can be set by a servo unit (17), which is controlled by a control unit (18) as a function of signals from a sensor (19), which senses the weight of the occupant.

4. Device according to claim 3, **characterized in that** the control unit (18) is coordinated with a positional sensor (20), which senses the position of the vehicle, and that the control unit (18) is arranged to close the spill valve (12) at a signal from the positional sensor, which indicates that the vehicle is about to end up upside-down.

5. Device according to one of claims 1 - 4, **characterized in that** the piston rod (4) engages an elongated flexible motion-transmitting element (24, 25), which has portions running over pulleys (22, 23) on either side of the cylinder (2), said portions converging at a distance from the second end wall (8) of the cylinder.

6. Device according to one of claims 1 - 5, **characterized in that** the motion-transmitting element (24, 25) is joined to and is partially wound up on a drum (26; 56), which is solidly joined to a ring gear (40; 55) of a planetary gear set, which is so disposed and coupled to the reel mechanism (28) that the gear ratio between the ring gear and the reel mechanism is 1:1 when the ring gear rotates in the winding-up direction of the belt web and is geared up upon rotation in the opposite direction, so that winding up of a certain length of the motion-transmitting element on the drum of the ring gear corresponds to a several times longer feeding-out of the web from the reel mechanism.

7. Device according to claim 6, **characterized in that** the inside of the drum (26) forms a ring gear (40) of a planetary gear set, which has a sun gear (36) with a shaft (34), which can be coupled together with a shaft (32) in the reel mechanism, and that blocking means (42, 45) are arranged which, upon rotation of the drum in the winding-up direction of the reel mechanism, lock the drum and the sun gear together and which, upon rotation in the opposite direction, release the sun gear from the drum and block the planet gear carrier of the planetary gear set against rotation.

8. Device according to claim 6, **characterized in that** the inside of the drum (56) forms a first ring gear (55), which engages first planet gears (53) on a planet gear carrier (52), which can be coupled together with a shaft in the reel mechanism, that second planet gears (54) on the planet gear carrier are solidly joined to the first planet gears and engage a second ring gear (58), and that blocking means are arranged which, upon rotation of the drum in the winding-up direction of the reel mechanism, lock the drum and the planet gear carrier together and which, upon rotation of the drum in the opposite direction, release the drum from the planet gear carrier and block the second ring gear against rotation.

## Patentansprüche

1. Vorrichtung zum Vorspannen einer Sicherheitsgurtbahn (31), die mit einem Aufwickelmechanismus (28) in einem Fahrzeug verbunden ist, mit einem Zylinder (2), einem Kolben (3), der in dem Zylinder verstellbar ist, und eine Kolbenstange (4) aufweist, die mit einer Seite des Kolbens verbunden ist, und sich durch eine Öffnung (5) in einer Endwand (6) des Zylinders erstreckt, einem Bewegungsübertragungselement (24, 25), das zwischen der Kolbenstange und dem Aufwickelmechanismus einwirkt, wobei das Element bei Verstellung des Kolbens in einer Richtung eine Drehung des Aufwickelmechanismus in der Aufwickelrichtung der Gurtbahn erzielt, einer pyrotechnischen Ladung (10), welche, wenn sie zur Explosion gebracht wird, eine Druckerhöhung in einer Zylinderkammer (9) zwischen dem Kolben und einer Zylinderendwand (8) hervorruft, zum Verstellen des Kolbens in die eine Richtung, und einer Vorrichtung (12) zum Steuern des Drucks in der Zylinderkammer in Abhängigkeit von dem Gewicht einer Person, die durch den Gurt festgehalten wird, **dadurch gekennzeichnet, dass** die Zylinderkammer (9) zwischen der Seite des Kolbens (3) entgegengesetzt zur Kolbenstange (4) und der zweiten Endwand (8) des Zylinders begrenzt ist, das Bewegungsübertragungselement (24, 25) so angeordnet ist, dass es den Aufwickelmechanismus (28) in Aufwickelrichtung der Gurtbahn dreht, wenn der Kolben in Richtung des Vorstehens der Kolbenstange verstellt wird, und die Zylinderkammer einen Auslass (11) aufweist, der mit einem Überströmventil (12) in Verbindung steht, das zwischen verschiedenen Öffnungsgraden und einer vollständig geschlossenen Position eingestellt werden kann.

2. Vorrichtung nach Anspruch 1, **dadurch gekennzeichnet, dass** das Überströmventil (12) stetig zwischen verschiedenen Öffnungsgraden und einer geschlossenen Position einstellbar ist.

3. Vorrichtung nach Anspruch 2, **dadurch gekennzeichnet, dass** das Überströmventil (12) ein Ventilelement (14) aufweist, das durch eine Servoeinheit (17) eingestellt werden kann, welche durch eine Steuereinheit (18) in Abhängigkeit von Signalen von einem Sensor (19) gesteuert wird, der das Gewicht des Insassen erfasst.

4. Vorrichtung nach Anspruch 3, **dadurch gekennzeichnet, dass** die Steuereinheit (18) mit einem Positionssensor (20) zusammenarbeitet, der die Position des Fahrzeugs erfasst, und die Steuereinheit (18) so ausgebildet ist, dass sie das Überströmventil (12) bei einem Signal von dem Positionssensor schließt, welches anzeigt, dass das Fahrzeug kopfüber liegen bleiben wird.

5. Vorrichtung nach einem der Ansprüche 1 bis 4, **dadurch gekennzeichnet, dass** die Kolbenstange (4) im Eingriff mit einem länglichen, flexiblen Bewegungsübertragungselement (24, 25) steht, welches Abschnitte aufweist, die über Riemenscheiben (22, 23) auf beiden Seiten des Zylinders (2) ablaufen, wobei sich die Abschnitte in einer Entfernung gegenüber der zweiten Endwand (3) des Zylinders vereinigen.

6. Vorrichtung nach einem der Ansprüche 1 bis 5, **dadurch gekennzeichnet, dass** das Bewegungsübertragungselement (24, 25) mit einer Trommel (26; 56) verbunden und teilweise auf diese aufgewickelt ist, die fest mit einem Hohlrad (40; 55) einer Planetengetriebegruppe verbunden ist, die so angeordnet und mit dem Aufwickelmechanismus (28) gekuppelt ist, dass das Übersetzungsverhältnis zwischen dem Hohlrad und dem Aufwickelmechanismus gleich 1:1 ist, wenn sich das Hohlrad in Aufwickelrichtung der Gurtbahn dreht, und bei Drehung in entgegengesetzter Richtung so übersetzt ist, dass das Aufwickeln einer bestimmten Länge des Bewegungsübertragungselements auf die Trommel des Hohlrades einer mehrfach längeren Abwicklung der Bahn von dem Aufwickelmechanismus entspricht.

7. Vorrichtung nach Anspruch 6, **dadurch gekennzeichnet, dass** das Innere der Trommel (26) ein Hohlrad (40) einer Planetengetriebegruppe bildet, welch ein Sonnenrad (36) mit einer Welle (34) aufweist, die mit einer Welle (32) in dem Aufwickelmechanismus zusammengekuppelt werden kann, und Sperrvorrichtungen (42, 45) vorgesehen sind, die bei Drehung der Trommel in der Aufwickelrichtung des Aufwickelmechanismus die Trommel und das Sonnenrad miteinander verriegeln, und bei Drehung in der entgegengesetzten Richtung das Sonnenrad von der Trommel lösen, und den Planetenradträger der Planetengetriebegruppe gegen eine Drehung sperren.

8. Vorrichtung nach Anspruch 6, **dadurch gekennzeichnet, dass** das Innere der Trommel (56) ein erstes Hohlrad (55) bildet, das im Eingriff mit ersten Planetenrädern (53) auf einem Planetenradträger (52) steht, der mit einer Welle in dem Aufwickelmechanismus zusammengekuppelt werden kann, zweite Planetenräder (54) auf dem Planetenradträger fest mit den ersten Planetenrädern verbunden sind, und im Eingriff mit einem zweiten Hohlrad (58) stehen, und Sperrvorrichtungen vorgesehen sind, die bei Drehung der Trommel in der Aufwickelrichtung des Aufwickelmechanismus die Trommel und den Planetenradträger miteinander verriegeln, und bei Drehung der Trommel in entgegengesetzter Richtung die Trommel von dem Planetenradträger freigeben, und das zweite Hohlrad gegen eine Drehung sperren.

## Revendications

1. Un dispositif pour la précontrainte d'une sangle de ceinture de sécurité (31) reliée à un mécanisme enrouleur (28) dans un véhicule, comportant un cylindre (2), un piston (3) qui est déplaçable dans le cylindre et présente une tige de piston (4), laquelle est reliée à un côté du piston et s'étend au travers d'une ouverture (5) dans une paroi d'extrémité (6) du cylindre, un élément transmetteur de mouvement (24, 25) agissant entre la tige de piston et le mécanisme enrouleur, ledit élément lors d'un déplacement du piston dans une direction, exécutant une rotation du mécanisme enrouleur dans la direction de rebobinage de la sangle de ceinture, une charge pyrotechnique (10) qui, lorsque détonnée, cause une augmentation de pression dans une chambre de cylindre (9) entre le piston et une paroi d'extrémité du cylindre (8) pour un déplacement du piston dans ladite direction, et des moyens (12) pour contrôler la pression dans ladite chambre de cylindre en fonction du poids d'une personne retenue par la ceinture, **caractérisé en ce que** ladite chambre de cylindre (9) est délimitée entre le côté du piston (3) opposé à la tige de piston (4) et la deuxième paroi d'extrémité (8) du cylindre, **en ce que** l'élément transmetteur de mouvement (24, 25) est agencé pour faire tourner le mécanisme enrouleur (28) dans la direction de rebobinage de la sangle de ceinture, lorsque le piston est déplacé dans la direction de projection de la tige de piston, et **en ce que** ladite chambre de cylindre présente une sortie (11), qui communique avec une soupape de décharge (12), qui peut être réglée parmi différents degrés d'ouverture et une position complètement fermée.

2. Un dispositif selon la revendication 1, **caractérisé en ce que** la soupape de décharge (12) est continuellement ajustable parmi différents degrés d'ouverture et une position fermée.

3. Un dispositif selon la revendication 2, **caractérisé en ce que** la soupape de décharge (12) présente un élément de soupape (14) qui peut être réglé par un système servo (17), qui est contrôlé par un groupe régulateur (18) en fonction des signaux provenant d'un détecteur (19) qui détecte le poids de l'occupant.

4. Un dispositif selon la revendication 3, **caractérisé en ce que en ce que** le groupe régulateur (18) est coordonné avec un détecteur de position (20), qui détecte la position du véhicule, et **en ce que** le groupe régulateur (18) est agencé pour fermer la soupape de décharge (12) lors d'un signal du capteur de position, qui indique que le véhicule est sur le point de se retrouver en sens dessus dessous.

5. Un dispositif selon l'une quelconque des revendications 1 à 4, **caractérisé en ce que** la tige de piston (4) engrène un élément transmetteur de mouvement (24, 25), flexible, allongé, qui présente des portions circulant sur des poulies (22, 23) de chaque côté du cylindre (2), lesdites portions convergeant à une certaine distance de la deuxième paroi d'extrémité (8) du cylindre.

6. Un dispositif selon l'une quelconque des revendications 1 à 5, **caractérisé en ce que** l'élément transmetteur de mouvement (24, 25) est relié à ainsi que partiellement embobiné sur un tambour (26; 56), qui est solidement relié à une couronne (40; 55) d'un train planétaire, qui est ainsi disposé et couplé au mécanisme enrouleur (28) afin que le rapport d'engrenage entre la couronne et le mécanisme enrouleur soit 1:1 lorsque la couronne tourne dans la direction de rebobinage de la sangle de ceinture et soit multiplié lors d'une rotation dans la direction opposée, de sorte qu'un rebobinage de l'élément transmetteur de mouvement d'une certaine longueur sur le tambour de la couronne correspond à un déroulement plusieurs fois plus long de la sangle du mécanisme enrouleur.

7. Un dispositif selon la revendication 6, **caractérisé en ce que** l'intérieur du tambour (26) forme une couronne (40) d'un train planétaire, qui présente un pignon soleil (36) avec un arbre (34), qui peut être couplé ensemble avec un arbre (32) dans le mécanisme enrouleur, et **en ce que** des moyens de blocage (42, 45) sont ainsi agencés, lors d'une rotation du tambour dans la direction de rebobinage du mécanisme enrouleur, pour bloquer le tambour et le pignon soleil ensemble et, lors d'une rotation dans la direction opposée, pour relâcher le pignon soleil du tambour et bloquer le porte-planétaire du train planétaire contre la rotation.

8. Un dispositif selon la revendication 6, **caractérisé en ce que** l'intérieur du tambour (56) forme une première couronne (55), qui engrène des premiers pignons planétaires (53) sur un porte-planétaire (52), lequel peut être couplé ensemble avec un arbre dans le mécanisme enrouleur, **en ce que** des deuxièmes pignons planétaires (54) sur le porte-planétaire sont solidement reliés aux premiers pignons planétaires et engrènent une deuxième couronne (58), et **en ce que** des moyens de blocage sont ainsi agencés, lors d'une rotation du tambour dans la direction de rebobinage du mécanisme enrouleur, pour verrouiller le tambour et le porte-planétaire ensemble et, lors d'une rotation du tambour dans la direction opposée, pour relâcher le tambour du porte-planétaire et bloquer la deuxième couronne contre la rotation.
